# EUROPEAN PATENT APPLICATION

(11) **EP 2 789 422 A2**
(43) Date of publication of application: **15.10.2014**
(21) Application number: 14161947.8
(22) Date of filing: 27.03.2014
(51) Int. Cl.: B23P 6/00, F01D 5/00, B23D 9/00

(54) **Shaping of aerofoil edges**

(30) Priority: 11.04.2013 GB 201306566
(71) Applicant: Rolls-Royce plc, London SW1E 6AT (GB)
(72) Inventor: Withey, James Robert, Alfreton, Derbyshire DE55 4EU (GB); Rigg, Graeme, Derby, DE21 7AF (GB); Carnell, David Alan, Nottingham, NG17 4ET (GB)
(74) Representative: Gee, Philip David

(57) **Abstract**

A portable device for shaping an edge of an aerofoil comprises a housing, a cutting tool mounted in the housing (the cutting tool having a cutting edge to remove material from the edge) and a plurality of guides mounted in the housing, so that in use the aerofoil engages with the guides to locate the edge of the aerofoil relative to the cutting edge and to permit movement of the housing in a cutting direction so as to remove material from the edge of the aerofoil. The device is characterised in that the cutting tool is mounted so that in use the cutting edge can move relative to the edge of the aerofoil in a direction generally perpendicular to the cutting direction.

## Description

This invention relates to methods and devices for shaping edges of aerofoils. In particular it relates to devices and methods for refurbishing the leading edges of service-worn aerofoils of gas turbine engines.

Aerofoils, especially fan blades, are subjected in use to impacts from airborne debris. Although generally such debris is very small and will not cause significant damage to the aerofoils or to the engine, one effect of the impacts is to flatten or blunt the leading edges of the aerofoils. This is detrimental to the engine's performance and is undesirable. It is therefore common for aerofoil leading edges to be refurbished to restore a more acceptable profile.

It is known to refurbish leading edge profiles of such aerofoils by hand dressing, using a hand-held mechanical abrasive tool. Inspection with profile gauges is used to determine when the correct profile shape has been achieved. This method requires very highly skilled operators, and it is difficult to achieve consistency in material removal and in the profile shape. Also, hand dressing is not approved by aviation authorities for use on installed engines and so the engine must be removed from the aircraft to enable the blades to be removed and dressed individually. This is time-consuming and expensive, and very disruptive to airlines' operations.

Automated methods for leading edge shaping are known, which can more easily achieve repeatable profile shapes. However, these methods also require the blades to be removed from the engine and individually mounted in a machining station, which in turn requires the engine to be removed from the aircraft. As noted above, this is costly and disruptive.

There is therefore a need for a device and method for shaping the edges of aerofoils that can achieve accurate and repeatable profiles without requiring high levels of operator skill, and which can be used on blades *in situ* in an engine, with the engine still on-wing.

Accordingly, the invention provides a device and method for shaping an edge of an aerofoil as set out in the claims.

In a first aspect the invention provides a portable device for shaping an edge of an aerofoil, the device comprising a housing, a cutting tool mounted in the housing, the cutting tool having a cutting edge to remove material from the edge, and a plurality of guides mounted in the housing, so that in use the aerofoil engages with the guides to locate the edge of the aerofoil relative to the cutting edge and to permit movement of the housing in a cutting direction so as to remove material from the edge of the aerofoil. The device is characterised in that the cutting tool is mounted so that in use the cutting edge can move relative to the edge of the aerofoil in a direction generally perpendicular to the cutting direction.

The guides allow the aerofoil to be repeatably located in the housing so that the edge of the aerofoil is brought into the correct relationship with the cutting edge. Because the cutting tool can move relative to the edge of the aerofoil, it can more readily follow the contour of the edge thereby ensuring that the edge profile is smooth along the entire length to be shaped.

The cutting tool may be pivotably mounted. This allows the cutting tool to rotate slightly about an axis in order to follow the contour of the edge. In a preferred embodiment, the cutting edge can move through an angle of about 5 degrees to each side of its central position.

The device may further comprise at least one spring which in use can apply a restoring force tending to centre the cutting tool. This helps to locate the cutting edge in the correct position relative to the edge of the aerofoil, and may help in reducing vibration of the cutting tool in use. In a preferred embodiment, a titanium sheet spring is mounted at each side of the cutting tool.

The cutting tool may have a plurality of cutting edges. For example, a triangular cutting tool may have a cutting edge at each vertex. This permits quicker replacement of a worn cutting edge by a fresh one, simply by rotating the cutting tool. The plurality of cutting edges may have different properties, for example different profiles or different cutting characteristics. In this way a single cutting tool may be used for successive cutting operations to bring an edge profile from an initial, damaged state to a final or near-final state.

The cutting tool may be angled with respect to the cutting direction. This may facilitate quicker or cleaner material removal and may lengthen the life of the cutting edge. In a preferred embodiment, the cutting edge may be angled at about 60 degrees to the cutting direction.

The guides may comprise rollers. These provide a positive and repeatable engagement with the aerofoil, and also facilitate smoother movement of the device along the aerofoil in the cutting direction than would pads or similar stationary guides.

A leading roller may be provided that engages, in use, with the edge of the aerofoil. This roller may be V-shaped to engage more securely with the edge.

A pair of side rollers may be provided that engage, in use, with opposing (pressure and suction) surfaces of the aerofoil. These rollers provide accurate positioning of the aerofoil so that the edge of the aerofoil is kept in a consistent relationship with the cutting edge.

The side rollers may be resiliently mounted. This helps to ensure consistent location of the aerofoil in the housing by ensuring that the rollers are always in contact with the aerofoil surfaces. Furthermore, it helps the device to follow more accurately the profile of the aerofoil in use, thereby improving the positioning of the cutting edge relative to the aerofoil edge. In a preferred embodiment, the side rollers are mounted on titanium sheet springs.

In a second aspect the invention provides a method of shaping an edge of an aerofoil, the method comprising the steps of providing a portable shaping device comprising a housing, a cutting tool having a cutting edge, and a plurality of guides, mounting the cutting tool in the housing so that the cutting edge can move relative to the edge of the aerofoil in a direction generally perpendicular to a cutting direction, locating the housing over the edge of the aerofoil so that the aerofoil engages with the guides and the edge of the aerofoil engages with the cutting edge, and moving the device along the aerofoil in the cutting direction so as to remove material from the edge of the aerofoil and thereby to shape it.

The guides allow the aerofoil to be repeatably located in the housing so that the edge of the aerofoil is brought into the correct relationship with the cutting edge. Because the cutting tool can move relative to the edge of the aerofoil, it can more readily follow the contour of the edge thereby ensuring that the edge profile is smooth along the entire length to be shaped.

Embodiments of the invention will now be described in more detail, with reference to the attached drawings, in which
Figure 1 shows a schematic view of a device according to a first aspect of the invention, mounted on an aerofoil;
Figure 2 shows a cutting tool for the device of Figure 1;
Figure 3 shows a close-up view of one of the cutting edges of the tool of Figure 2, located over an edge of an aerofoil;
Figure 4 shows the resilient mounting of the cutting tool of Figure 2 between two springs, in a preferred embodiment;
Figure 5 shows the device of Figure 1, viewed from above;
Figure 6 shows the leading roller and side rollers engaging an aerofoil, viewed approximately in the direction of the arrow VI in Figure 1;
Figure 7 shows a cross-section through the leading edge region of two alternative designs of fan blade; and
Figure 8 shows two alternative arrangements of a cutting edge.

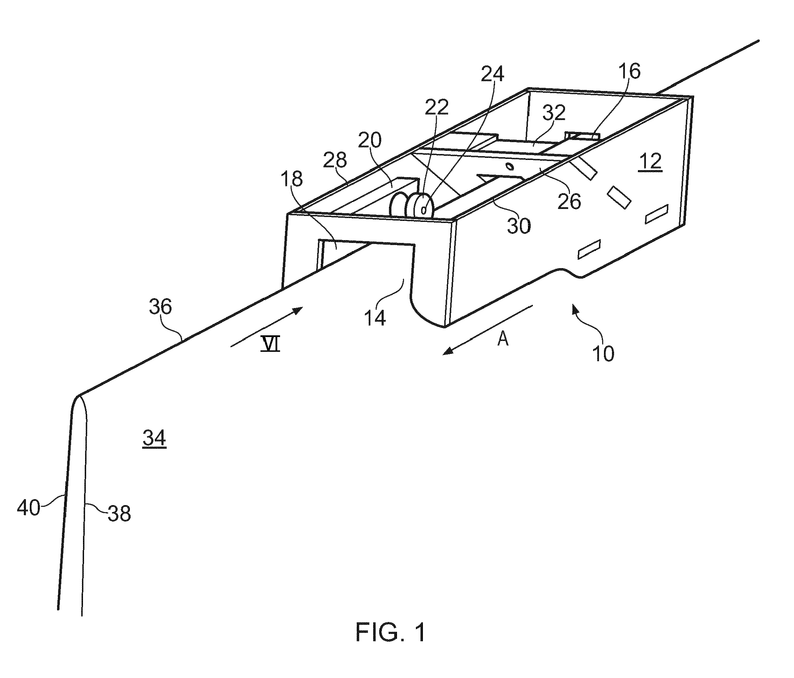

Referring first to **Figure 1****,** a device according to a first aspect of the invention is shown generally at 10. The device comprises a sheet-metal housing 12, which forms a generally box-like structure. Apertures 14, 16 in the ends of the housing define a longitudinal channel 18.

A block 20, attached to one side wall 28 of the housing 12, supports a leading roller 22 which is mounted on a spindle 24 so it can rotate freely. The leading roller has a V-shaped profile, which will be further described below.

A sheet-metal support plate 26 is attached to opposite side walls 28, 30 of the housing 12 and spans the width of the housing. Mounted to the support plate is a cutting tool 32, which will be further described below.

In use, the device 10 is located on a fan blade 34 of a gas turbine engine, so that the leading edge 36 of the fan blade lies within the channel 18. The leading edge 36 is supported by the leading roller 22. The V-shaped profile of the leading roller 22 engages with the leading edge 36 to ensure its correct positioning.

Two side rollers (not shown in Figure 1) engage with the pressure surface and suction surface 38, 40 of the fan blade 34. These rollers will be described in more detail below.

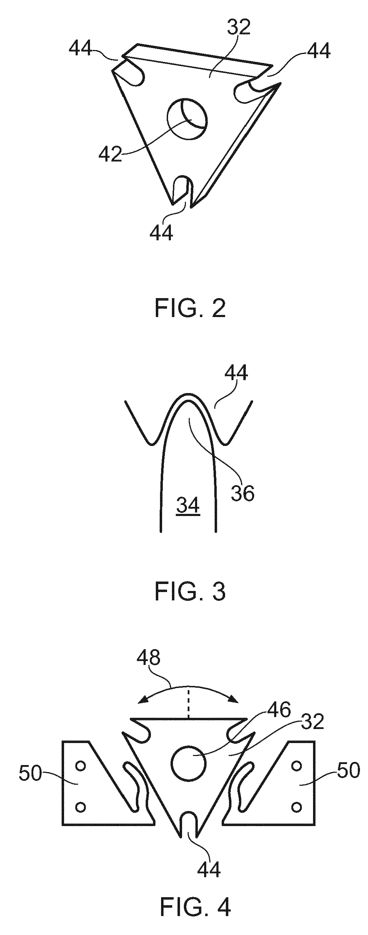

**Figure 2** shows the cutting tool 32. The cutting tool is generally triangular and is formed of tungsten carbide. A mounting hole 42 is centrally located to allow the cutting tool to be secured to the support plate 26 of Figure 1 by means of a bolt or similar fastening.

At each vertex of the cutting tool 32 is formed a cutting edge 44. When the cutting tool 32 is mounted in the housing 12, one cutting edge 44 will extend into the channel 18 so as to engage with the leading edge 36 of the fan blade 34, as will be explained presently. The other two cutting edges are not in use. This arrangement means that a worn cutting edge 44 can very easily be replaced by a fresh one simply by rotating and re-securing the cutting tool 32.

The shape of the cutting edge 44 is designed to produce the desired leading edge profile for the fan blade, as recorded in the CAD model for the blade. In use, the leading roller 22 (Figure 1) and the side rollers support the fan blade in the correct position to bring the leading edge 36 of the fan blade 34 into contact with the cutting edge 44. The relationship between the cutting edge 44 and the leading edge 36 of the fan blade 34 may be seen more clearly in **Figure 3****.**

It is clear from Figure 1 that the support plate 26 is angled, so that the cutting tool (and therefore the cutting edge) is presented to the leading edge of the fan blade at an angle. The optimum angle may vary according to the specific configuration of the cutting tool and the blade to be shaped, but for this embodiment the support plate is angled at about 60 degrees to the direction indicated by the arrow A. It is envisaged that the benefits of the invention could be achieved with support plate (and therefore cutting tool) angles between about 55 degrees and about 85 degrees to the direction indicated by the arrow A. If the cutting tool were positioned at an angle less than about 55 degrees it would not remove material effectively from the blade leading edge. If the cutting tool were positioned at an angle greater than about 85 degrees it would judder, which would be detrimental to the quality of the material removal.

In use, only the leading roller 22 and the cutting edge 44 are in contact with the leading edge 36. The leading roller 22, as well as supporting the fan blade in the correct position, maintains the correct angle of the cutting tool relative to the blade leading edge. This arrangement enables the cutting edge 44 to remain constantly in contact with the leading edge 36 of the blade, and consistently at the correct angle, even though the geometry of the leading edge along its length is complex.

It will be appreciated that the shape of the cutting edge 44 may need to be modified to take account of the cutting tool angle to be used, so that the resulting blade profile is as desired.

Figure 4 again shows the cutting tool 32. As mentioned previously, the cutting tool is pivotably mounted to the support plate (26 in Figure 1) by means of a bolt or similar fastening 46. The cutting tool 32 is therefore able to rotate about the axis provided by the bolt 46. In use, therefore, the cutting tool 32 is able to move in the directions shown by the double-headed arrow 48 to follow the complex geometry of the fan blade 34, while still ensuring that the cutting edge 44 remains constantly in contact with the leading edge 36 of the fan blade 34.

In the embodiment shown in Figure 4, titanium sheet springs 50 are located at each side of the cutting tool 32. The springs bear against opposite sides of the cutting tool 32 and will tend to hold it in, or return it to, a central position. The springs 50 are mounted on the support plate 26.

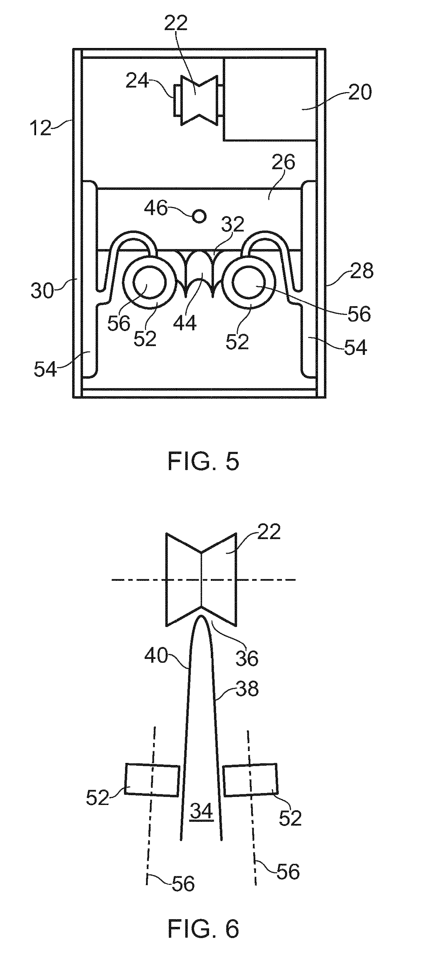

**Figure 5** is a view from above of the device shown in Figure 1. The support plate 26 spans the width of the housing and is secured to the side walls 28, 30. The block 20, attached to one side wall 28 of the housing 12, supports the leading roller 22 which is rotatably mounted on the spindle 24. Cutting tool 32 is mounted to the support plate 26 by bolt 46.

Two side rollers 52 are mounted to the side walls 28, 30 of the housing 12 via sheet titanium springs 54. Each side roller 52 is mounted on a spindle 56 so it can rotate freely.

In use, the side rollers 52 engage with the pressure and suction surfaces of the fan blade 34 to guide it through the housing and to ensure that the cutting edge 44 is kept in the correct relationship with the leading edge of the fan blade. The springs ensure that the rollers always maintain contact with the surfaces of the fan blade.

To use the device, it is first positioned on the leading edge 36 of the fan blade 34, using the location features (the leading roller 22 and the side rollers 52) to centralise it against the cutting edge 44. The device is then moved manually along the fan blade 34 in a cutting direction shown by the arrow A. For a fan blade installed in an engine this would be in a generally radial direction. As this happens the cutter shaves the leading edge, removing material from it until it has the same profile as the cutting edge. If necessary, several passes of the device may be performed until the profile of the leading edge matches the desired profile. Finally, the leading edge is manually polished with a standard polishing cloth to attain a surface finish comparable with the surrounding area.

An arrangement may be provided to collect and contain the removed material so that it can be safely removed from the engine. This ensures that it cannot pass through the engine (potentially causing damage), and that it can be recycled or disposed of appropriately. Such an arrangement may, for example, include a vacuum removal device.

**Figure 6** shows a further view of the device in use, approximately along the arrow VI in Figure 1. The side rollers 52 bear against the pressure 38 and suction 40 surfaces of the fan blade 34. The leading roller 22 supports the leading edge 36 of the fan blade 34. In this way, the leading edge is held in the correct relationship with the cutting edge as the device is moved along the complex geometry of the fan blade.

It can be seen that the spindles 56 are not vertical, but are inclined slightly, so they are parallel with the pressure and suction surfaces 38, 40 of the blade 34. This ensures better contact and support between the side rollers 52 and the blade surfaces, and also reduces any tendency for the blade to "ride up" between the side rollers.

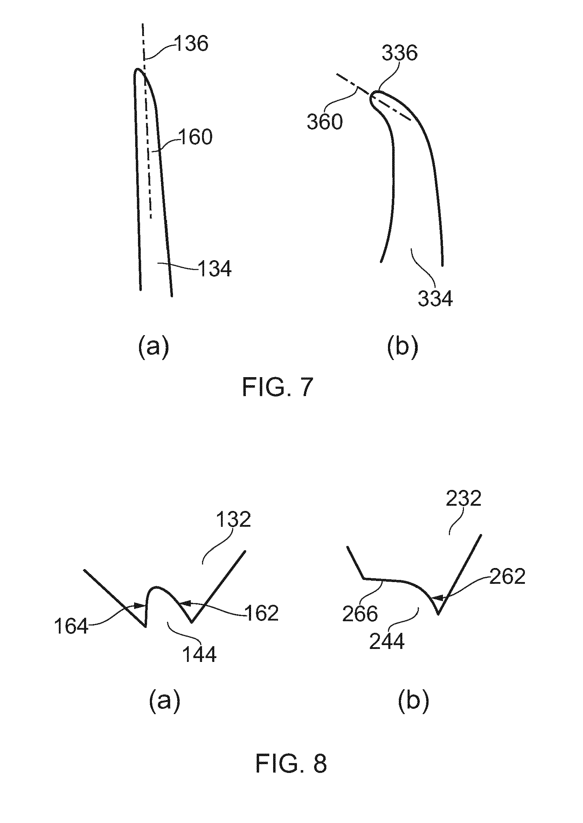

**Figure 7(a)** shows a cross-section through the leading edge region of an alternative design of fan blade 134, with an asymmetric leading edge profile. That is to say, the position of the leading edge 136 is displaced from the centre line 160 of the fan blade 134. To refurbish such a leading edge, a cutting tool will be required whose cutting edge is profiled to match the asymmetric leading edge profile, and this can readily be achieved in the same manner explained above for symmetrical leading edges.

**Figure 7(b)** shows a cross-section through the leading edge region of a further alternative design of fan blade 334, with a drooped tip. The leading edge 336 is substantially elliptical, as in the fan blade shown in Figure 6, but the blade tip is drooped so that the centre line 360 through the leading edge is at an angle to the blade 334. As for the blade shown in Figure 7(a), a cutting tool will be required whose cutting edge is profiled to match the drooped leading edge profile; as before, this can be achieved in the same manner as explained above.

However, for some blade profiles and especially for asymmetric or drooped profiles as shown in Figure 7(a) and Figure 7(b), it may not be necessary or desirable to reprofile both sides of the leading edge. For example, to reprofile both sides of the drooped tip of Figure 7(b) may remove part of the droop, thereby fundamentally affecting the blade geometry. Therefore, an alternative form of cutting edge may be required that will only remove material from one side of the leading edge. Two examples of such cutting edges are shown in Figure 8.

**Figure 8(a)** shows part of a cutting tool 132 with a cutting edge 144 profiled to refurbish an asymmetric leading edge such as that shown in Figure 7. The cutting edge 144 has a first cutting edge part 162, which in use will remove material from that part of the leading edge it contacts in the manner explained above. The second cutting edge part 164, by contrast, is arranged (for example, by rounding or chamfering its edges) so that it will not act as a cutting edge in use, but will merely help to guide the cutting edge 144 along the leading edge.

An alternative arrangement is shown in **Figure 8(b)****.** A cutting tool 232 has a cutting edge 244, which has a first cutting edge part 262 essentially identical to the first cutting edge part 162 in Figure 8(a). The other side of the cutting edge 266 is cut away, however, so that in use only the first cutting edge part 262 will contact the blade leading edge and remove material from it. A similar arrangement to that of Figure 8(b) would be particularly suitable for blades with drooped tips.

In both the embodiments of Figure 8, the blade will be supported in use in the manner explained previously, so as to ensure consistent contact between the blade leading edge and the cutting edge 144, 244. To facilitate this in the case of an asymmetric leading edge, and in particular where only one side of the leading edge is to have material removed from it, the side rollers (52 in Figure 5) may be resiliently mounted only on one side (generally on the opposite side from that on which material is to be removed). The side roller on the side on which material is to be removed will be mounted without a resilient element.

The embodiments of the invention described above are illustrative and are not intended to be limiting. It will be appreciated that various modifications and alternatives may be employed, without departing from the scope of the invention.

The device may be employed to shape the profiles of leading or trailing edges of any type of aerofoil. Although the described embodiments relate to fan blades, the device could be adapted for use on any sort of rotating or static aerofoil within a gas turbine engine, including those on blisks, blings and the like.

The housing may be constructed in any convenient way, and of any suitable material.

Other numbers or configurations of rollers may be used, provided they fulfil the purpose of locating the aerofoil with respect to the cutting edge. Other types of guides may be used instead of rollers, for example pads made from, or coated with, low-friction material.

The spring-loading of the rollers may be achieved by a different type of spring, or indeed by a different type of resilient mounting such as an elastomeric material.

The cutting tool may take a different form, or be made from a different material. The cutting tool may have only a single cutting edge. Where the cutting tool has multiple cutting edges, the different cutting edges may have different properties, for example different profiles or different cutting characteristics. In this way a single cutting tool may be used for successive cutting operations to bring an edge profile from an initial, damaged state to a final or near-final state.

When different cutting edges are used to perform successive cutting operations, the angle of the cutting tool may not be the same for each cutting operation. For example, a first cut may be performed with a cutting tool angle close to 60 degrees to the direction indicated by the arrow A in Figure 1, but a subsequent finish cut may be performed with a cutting tool angle close to 85 degrees.

To facilitate this, the cutting blade may be mountable at different angles with respect to the support plate, or the support plate may be mountable at different angles with respect to the housing.

Where the leading edge refurbishment is to be achieved by successive cutting operations, a plurality of cutting edges may be provided in sequence, for example by mounting a plurality of cutting tools to the support plate 26 by the same bolt 46, so that they form a "stack". In use, the plurality of cutting edges will engage with the leading edge of the aerofoil simultaneously as the device is located on the aerofoil. As the device is moved along the blade leading edge, the first cutting edge performs the first cut on a given section of the leading edge, followed by the second cutting edge performing the second cut on the same section, and so on, in the manner of a broach. With such an arrangement, it may be possible to achieve the refurbishment of the leading edge with a single pass of the device along the blade.

The profile of the cutting edge may be taken from the CAD model of the blade as originally manufactured. However, it may alternatively be a different profile, for example to provide a simple means for reprofiling blades if an improved leading edge profile is subsequently identified. As noted before, the profile of the cutting edge may need to be adjusted to take account of the angling of the cutting tool.

The cutting tool may simply be pivoted, without springs to support it. If springs are provided they may be of any suitable type, or may be replaced by a different type of resilient mounting such as an elastomeric material. The range of movement of the cutting tool may be less or greater than in the embodiment described.

To help ensure simple and reliable operation of the device, a visual indication may be provided to show the operator the correct direction of movement for the device in use. For example, an arrow might be provided on the sides or top of the housing to show the correct direction of travel, or colour-coding might be used (for example, green on the "front" of the housing and red on the "rear").

The invention therefore provides a device for shaping the edges of aerofoils that is quick to use, and may be used during an aircraft's normal downtime at an airport. The pre-formed profile cutter, shaped according to the CAD model of the ideal leading edge profile, provides accurate and repeatable shaping of the leading edge to a predetermined profile with minimal operator training. The device can be used on-wing with the blades still installed in the engine. The device is lightweight and easily transportable, and requires no external power source.

## Claims

1. A portable device (10) for shaping an edge (36) of an aerofoil (34), the device comprising:
a housing (12);
a cutting tool (32) mounted in the housing, the cutting tool having a cutting edge (44) to remove material from the edge of the aerofoil; and
a plurality of guides(22, 52) mounted in the housing, so that in use the aerofoil engages with the guides to locate the edge of the aerofoil relative to the cutting edge and to permit movement of the housing in a cutting direction so as to remove material from the edge of the aerofoil;
the device **characterised in that** the cutting tool is mounted so that in use the cutting edge can move relative to the edge of the aerofoil in a direction generally perpendicular to the cutting direction.

2. The device of claim 1, in which the cutting tool is pivotably mounted.

3. The device of claim 2, in which the cutting edge can move through an angle of about 5 degrees to each side of its central position.

4. The device of claim 3, further comprising at least one spring (50) which in use can apply a restoring force tending to centre the cutting tool.

5. The device of any preceding claim, in which the cutting tool has a plurality of cutting edges.

6. The device of any preceding claim, in which in use the cutting tool is angled at between about 55 degrees and about 85 degrees to the cutting direction.

7. The device of any preceding claim, in which in use the cutting tool is angled at about 60 degrees to the cutting direction.

8. The device of any preceding claim, comprising a plurality of cutting tools mounted so as to engage simultaneously with the edge of the aerofoil, so that the plurality of cutting tools operates sequentially in use to remove material from the leading edge of the aerofoil.

9. The device of any preceding claim, in which the guides comprise rollers.

10. The device of claim 9, in which a leading roller (22) engages in use with the edge of the aerofoil.

11. The device of claim 9 or claim 10, in which a pair of side rollers (52) engage in use with opposing surfaces of the aerofoil.

12. The device of claim 11, in which the side rollers are resiliently (54) mounted.

13. The device of any preceding claim, in which the cutting edge comprises a first cutting edge part that in use removes material from part of the edge of the aerofoil and a second cutting edge part that engages with the part of the edge of the aerofoil but does not remove material from it.

14. A method of shaping an edge (36) of an aerofoil (34), the method comprising the steps of:
providing a portable shaping device (10) comprising a housing (12), a cutting tool (32) having a cutting edge (44), and a plurality of guides (22, 52);
mounting the cutting tool in the housing so that the cutting edge can move relative to the edge of the aerofoil in a direction generally perpendicular to a cutting direction;
locating the housing over the edge of the aerofoil so that the aerofoil engages with the guides and the edge of the aerofoil engages with the cutting edge;
moving the device along the aerofoil in the cutting direction so as to remove material from the edge of the aerofoil and thereby to shape it.
